# EUROPÄISCHE PATENTANMELDUNG

(11) **EP 3 012 293 A1**
(43) Veröffentlichungstag der Anmeldung: **27.04.2016**
(21) Anmeldenummer: 14189489.9
(22) Anmeldetag: 20.10.2014
(51) Int. Cl.: C08L 23/02, C08L 23/14, F16L 9/02, F16L 58/10

(54) **Mit einem vernetzten, olefinischen, thermoplastischen Elastomer beschichtetes Stahlrohr**

(71) Anmelder: Mitsui Chemicals Europe GmbH, 40211 Düsseldorf (DE)
(72) Erfinder: Wissmann, Andreas, 59379 Selm-Cappenberg (DE); Hinterbauer, Winfried, 40545 Düsseldorf (DE); Ita, Yuichi, Tokyo 105-7122 (JP)
(74) Vertreter: Hoffmann Eitle

(57) **Zusammenfassung**

Es wird ein beschichtetes Stahlrohr bereit gestellt, das unter strengen Umweltbedingungen verwendet werden kann und dessen Hitzebeständigkeit und Stossfestigkeit bei niedrigen Temperaturen hervorragend ist.

Dies wird erreicht durch ein Stahlrohr, das über denaturierte Polyolefine auf der oberflächenvorbehandelten Außenoberfläche mit einem vernetzten, olefinischen, thermoplastischen Elastomer beschichtet ist, das erzielt wird aus einem Gemisch enthaltend 15 bis 38 Gew.-Teile eines Ethylen-α-Olefine-nichtkonjungierten Polyene-Copolymergummis (A) aus Ethylen, einem oder mehr α-Olefinen einer Kohlenstoffzahl von 3 bis 20 und einem oder mehr nichtkonjungierten Polyenen, 85 bis 62 Gew.-Teilen Polypropylenharz (B) [die Gesamtmenge der Bestandteile (A) und (B) ergibt 100 Gew.-Teile] und 0,05 bis 10 Gew.-Teile Vernetzer (C).

## Beschreibung

### [Technisches Gebiet]

Die vorliegende Erfindung betrifft ein Stahlrohr, dessen Außenoberfläche mit einem vernetzten, olefinischen, thermoplastischen Elastomer beschichtet ist.

### [Hintergrundtechnologie]

Für Leitungen zum Transport von Rohöl, raffiniertem Öl, Erdgas, heißem Wasser usw. können Stahlrohre verwendet werden, bei denen zum Schutz vor Korrosion die Außenoberfläche mit einem Polyolefin wie Polyethylen oder Polypropylen beschichtet ist. Als solche mit Polyolefin beschichtete Stahlrohre werden üblicherweise Stahlrohre verwendet, bei denen die Außenoberfläche der Oberflächenvorbehandelten Stahlrohre über denaturiertes Polyolefin mit Polyethylen beschichtet ist, oder Stahlrohre, die in gleicher Weise mit Polypropylen beschichtet sind.

Derartige Stahlrohre werden häufig zur unterirdischen Verlegung im Boden verwendet. Da der Überzug insbesondere bei der unterirdischen Verlegung in extrem kalten Gebieten, durch den Kontakt der Stahlrohre mit schweren Geräten, harter Erde, Steinen und Gestein usw. oder durch gegenseitiges Aneinanderstoßen der Stahlrohre Beschädigungen erleiden kann, ist es erforderlich, dass das Überzugsharz Stossfestigkeit bei niedrigen Temperaturen aufweist.

Andererseits kann es vorkommen, dass zum Beispiel für den Transport von Schweröl, dieses zur Senkung der Viskosität und Erhöhung der Transportgeschwindigkeit auf eine hohe Temperatur von 80 °C bis 100 °C erwärmt transportiert wird. Ist dabei die Hitzebeständigkeit des Überzugharzes unzureichend, weicht unter hohen Temperaturen die Überzugsschicht auf, es entstehen Durchbrüche aufgrund von Steinen, Gestein usw., und es besteht die Gefahr der Entstehung von Korrosion hierdurch.

In der Patentliteratur 1 ist ein harzüberzogenes Stahlrohr offenbart, das gebildet wird, indem die Oberfläche eines Stahlrohrs über ein durch ungesättigte Karbonsäure oder deren Anhydrid denaturiertes kristallines Polypropylen mit einem kristallinen Polypropylen und ggfs. einem andere Olefin-Polymer enthaltenden Harz beschichtet wird.

Die in der Patentliteratur 1 angegebene Erfindung hat zwar den Zweck, die Stossfestigkeit bei niedrigen Temperaturen zu verbessern, die erzielte Stossfestigkeit bei niedrigen Temperaturen kann jedoch nicht als hinreichend erachtet werden.

In der Patentliteratur 2 ist ein harzüberzogenes flexibles Stahlrohr offenbart, das aus einem Stahlrohr und einer die Außenoberfläche des Stahlrohres harzüberziehenden Außenschicht besteht, wobei die Außenschicht aus einem keine halogenen Substanzen enthaltenden thermoplastischen Elastomer und einer mit dem thermoplastischen Elastomer vermischten, anorganische Füllstoffe enthaltenden Harzzusammensetzung besteht.

Die in der Patentliteratur 2 angegebene Erfindung hat den Zweck, ein harzüberzogenes flexibles Stahlrohr bereitzustellen, das keine Entstehung von schädlichen Gasen bei der Verbrennungsentsorgung oder Umweltverschmutzung hervorruft und eine verbesserte Verbiegbarkeit des flexiblen Stahlrohrs aufweist. Die Hitzebeständigkeit ist jedoch problematisch.

### [Literatur zum Stand der Technik]

### [Patentliteratur]

[Patentliteratur 1] JP Patentoffenlegung Nr. 59-54880
[Patentliteratur 2] JP Patentoffenlegung Nr. 2001-219500

### [Übersicht der Erfindung]

### [Durch die Erfindung zu lösende Aufgabe]

Wie vorstehend erläutert, ist es wünschenwert, dass das Überzugsharz eines Stahlrohrs, das unter harten Umweltbedingungen verwendet wird, beides aufweist, sowohl Stossfestigkeit bei niedrigen Temperaturen als auch Hitzebeständigkeit. Tatsächlich ist es jedoch so, dass Polyethylen hinsichtlich der Stossfestigkeit bei niedrigen Temperaturen zwar überragend ist, die Hitzebeständigkeit jedoch unzureichend ist. Andererseits ist die Hitzebeständigkeit von Polypropylen hinreichend, während die Stossfestigkeit bei niedrigen Temperaturen ungenügend ist. Gewünscht ist daher die Entwicklung eines mit einem Harz beschichteten Stahlrohrs, das beide Charakteristiken hinreichend erfüllt.

### [Mittel zum Lösen der Aufgabe]

Das Wesentliche der Erfindung läßt sich wie folgt zusammenfassen:
(1) Stahlrohr, das über denaturierte Polyolefine auf der Oberflächenvorbehandelten Außenoberfläche mit einem vernetzten, olefinischen, thermoplastischen Elastomer beschichtet ist, das erzielt wird aus einem Gemisch umfassend 15 bis 38 Gew.-Teile eines Ethylen-α-Olefin-nichtkonjungiertes Polyen-Copolymergummis (A) aus Ethylen, einem oder mehr α-Olefinen einer Kohlenstoffzahl von 3 bis 20 und einem oder mehr nichtkonjungierten Polyenen, 85 bis 62 Gew.-Teilen Polypropylenharz (B) [die Gesamtmenge der Bestandteile (A) und (B) ergibt 100 Gew.-Teile] und 0,05 bis 10 Gew.-Teile Vernetzer (C).
(2) Stahlrohr gemäß den Angaben von Punkt (1), wobei das vernetzte, olefinische, thermoplastische Elastomer erhalten wird, indem ein Gemisch enthaltend 15 bis 38 Gew.-Teile eines Ethylen-α-Olefin-nichtkonjungiertes Polyen-Copolymergummis (A) aus Ethylen, einem oder mehr α-Olefinen mit einer Kohlenstoffzahl von 3 bis 20 und einem oder mehr nichtkonjungierten Polyenen, 85 bis 62 Gew.-Teilen Polypropylenharz (B) [die Gesamtmenge der Bestandteile (A) und (B) ergibt 100 Gew.-Teile] und 0,05 bis 10 Gew.-Teile Vernetzer (C) einem kontinuierlichen Kneter kontinuierlich zugeführt und dynamisch wärmebehandelt wird.
(3) Stahlrohr gemäß den Angaben von Punkt (1) oder (2), wobei das Gemisch ferner wenigstens eines, ausgewählt aus 1 bis 50 Gew.-Teilen eines anderen Polyolefinharzes (D) als dem Polypropylenharz (B), 1 bis 70 Gew.-Teilen Weichmacher (E) und 1 bis 70 Gew.-Teile anorganischer Füllstoffe (F), umfasst.
(4) Stahlrohr gemäß den Angaben von Punkt (2) oder Punkt (3), wobei das Ethylen-α-Olefinnichtkonjungiertes Polyen-Copolymergummi (A) aus Ethylen, einem oder mehr α-Olefinen mit einer Kohlenstoffzahl von 3 bis 20 und einem oder mehr nichtkonjungierten Polyenen mit einem Teil von oder dem gesamten Weichmacher (E) ölverstreckt wird.
(5) Stahlrohr gemäß den Angaben von einem der Punkte (2) bis (4), wobei der Vernetzer (C) ein organisches Peroxid und/oder ein Phenolharz ist.
(6) Gemisch, umfassend 15 bis 38 Gew.-Teile eines Ethylen-α-Olefin-nichtkonjungiertes Polyen-Copolymergummis (A) aus Ethylen, einem oder mehr α-Olefinen mit einer Kohlenstoffzahl von 3 bis 20 und einem oder mehr nichtkonjungierten Polyenen, 85 bis 62 Gew.-Teilen Polypropylen (B) [worin die Gesamtmenge der Bestandteile (A) und (B) 100 Gew.-Teile ergibt] und 0,05 bis 10 Gew.-Teile Vernetzer (C).
(7) Gemisch gemäß Punkt (6), welches ferner wenigstens eines, ausgewählt aus 1 bis 50 Gew.-Teile eines anderen Polyolefinharzes (D) als dem Polypropylenharz (B), 1 bis 70 Gew.-Teile Weichmacher (E) und 1 bis 70 Gew.-Teile anorganischer Füllstoffe (F), umfasst.
(8) Vernetztes Material, erhältlich durch Vernetzen des Gemisches des Gemisches gemäß Punkt (6) oder (7).
(9) Verfahren zur Herstellung eines beschichteten Metallwerkstücks, insbesondere eines Stahlrohrs, worin das Metallwerkstück oberflächenbehandelt wird, um eine Oberfläche zu bilden, die denaturiertes Polyolefin umfasst, und das oberflächenbehandelte Metallwerkstück mit einem vernetzten Material gemäß Punkt (8) beschichtet wird.
(10) Verfahren gemäß Punkt (9), worin das vernetzte Material über einen kontinuierlichen Kneter kontinuierlich zugeführt und dynamisch vernetzt wird.

### [Wirkungen der Erfindung]

Das beschichtete Stahlrohr gemäß der vorliegenden Erfindung hat eine hervorragende Hitzebeständigkeit und Stossfestigkeit bei niedrigen Temperaturen, so dass es geeignet ist, um unter strengen Umweltbedingungen, insbesondere in extrem kalten Gebieten, z. B. Rohöl bei hohen Temperaturen effektiv zu transportieren.

### [Ausführungsformen der Erfindung]

Bei dem Stahlrohr gemäß der vorliegenden Erfindung ist die Außenoberfläche des Oberflächenvorbehandelten Stahlrohres über denaturierte Polyolefine mit einem vernetzten, olefinischen, thermoplastischen Elastomer beschichtet, das beides aufweist, sowohl Stossfestigkeit bei niedrigen Temperaturen als auch Hitzebeständigkeit.

Als Material für das Stahlrohr der vorliegenden Erfindung wird ein legierter Stahl, z. B. C-Stahl oder Edelstahl verwendet.

Bevor das Stahlrohr der vorliegenden Erfindung mit einem vernetzten, olefinischen, thermoplastischen Elastomer beschichtet wird, erfolgt zunächst eine Oberflächenvorbehandlung. Als konkrete Behandlung kann z. B. ein Verfahren angeführt werden, bei dem die Oberfläche von Stahlmaterial, deren Ansatz durch eine Abstrahlbehandlung, Beizen/Entfetten usw. beseitigt wurde, mit einem Chromfilm und einem Epoxidgrundierungsfilm versehen wird. Die Filmdicke des Chromfilms sollte bei der Konversion der Ansatzmenge des gesamten Chroms nach dem Brennen bevorzugt im Bereich von 20 mg bis 1000 mg/m² liegen. Unterhalb der unteren Grenze kommt es leicht zu einer Korrosion des Stahlrohrs und bei Überschreiten der oberen Grenze besteht die Tendenz einer Abnahme der Haftung zwischen Stahlrohr und Epoxidgrundierung.

Die Dicke der Epoxidgrundierungsschicht sollte bevorzugt im Bereich von 10 µm bis 200 µm liegen. Unterhalb der unteren Grenze kommt es leicht zu einer Korrosion des Stahlrohrs und bei Überschreiten der oberen Grenze besteht die Tendenz einer Abnahme der Stossfestigkeit bei niedrigen Temperaturen.

Als denaturierte Polyolefine werden in der vorliegenden Erfindung Polyolefine (z.B. Polyethylen, Polypropylen) bezeichnet, die mit ungesättigten Karbonsäuren oder Karbonsäureanhydriden behandelt, typischerweise gepfropft, sind. Diese Karbonsäuren und Karbonsäureanhydride sind bevorzugt cyclische Verbindungen. Verfahren zur Herstellung solcher denaturierten Polyolefine sind dem Fachmann bekannt und z.B. in EP 0 504 386 und US 3,873,643 beschrieben. Spezifische Beispiele von Karbonsäuren und Anhydriden umfassen 4-Methylcyclohex-4-en-1,2-dikarbonsäureanhydrid, Tetrahydrophthalsäureanhydrid, x-methylnorborn-5-en-2,3-dikarbonsäureanhydrid, Norborn-5-en-2,3-dikarbonsäureanhydrid, 2-Cyclopentenylessigsäure, Bicyclo[2.2.2]oct-5-en-2,3-dikarbonsäurehydrid und Maleinsäureanhydrid.

Erfindungsgemäß ist die Verwendung von Maleinsäureanhydrid-gepfropften Polyolefinen bevorzugt. Als Polyolefinart ist unter dem Aspekt der Hitzebeständigkeit die Verwendung von Polypropylen bevorzugt, ferner kann zum Zweck der Verbesserung der Stossfestigkeit bei niedrigen Temperaturen dem durch Karbonsäure oder Karbonsäureanhydrid (wie z.B. Maleinsäureanhydrid) denaturiertem Polypropylen eine geringe Menge Polyolefinelastomer beigemischt werden. Eine Dicke der Schicht der denaturierten Polyolefine von 50 µm bis 400 µm ist bevorzugt.

Das bei der vorliegenden Erfindung bevorzugt verwendete vernetzte, olefinische, thermoplastische Elastomer ist ein Elastomer, bei dem die Partikel des in der Matrix des Polypropylenharzes (B) vernetzten Ethylen-α-Olefin-nichtkonjungiertes Polyen-Copolymergummis (A) fein dispergiert sind.

Das Ethylen-α-Olefin-nichtkonjungiertes Polyen-Copolymergummi (A) ist ein Copolymer von Ethylen, einem oder mehr α-Olefinen einer Kohlenstoffzahl von 3 bis 20 und einem oder mehr nichtkonjungiertem Polyenen. Hierin sind bevorzugte α-Olefine einer Kohlenstoffzahl von 3 bis 20 Propylen, 1-Buten, 1-Penten, 1-Hexen, 1-Octen, 1-Decen, 2-Methyl-1-Propen, 3-Methyl-1-Penten, 4-Methyl-1-Penten, 5-Methyl-1-Hexen, wobei Propylen besonders bevorzugt ist. Es kann ein einzelnes α-Olefin mit einer Kohlenstoffzahl von 3 bis 20 verwendet werden, oder es können mehrere (z.B. zwei oder drei) α-Olefine in Kombination verwendet werden.

Die nichtkonjugierten Polyene verfügen nicht über kongugierte Doppelbindungen, wie sie z.B. in 1,3 Budadien vorliegen. Die nichtkonjugierten Polyene weisen bevorzugt zwei, drei, vier oder fünf, stärker bevorzugt zwei (Dien) oder drei (Trien), am stärksten bevorzugt zwei Doppelbindungen auf. Bevorzugte nichtkonjugierte Polyene umfassen 5-Ethylidene-2-norbornene, Dicyclopentadiene, 1,4-Cyclohexadiene und Vinyl norbornene. Es kann ein einzelnes nichtkonjugiertes Polyen verwendet werden, oder es können mehrere nichtkonjugierte Polyene in Kombination verwendet werden.

Als Ethylen-α-Olefin-nichtkonjungiertes Polyen-Copolymergummi (A) wird insbesondere ein Ethylen-Propylen-Dien-Copolymer (EPDM) bevorzugt verwendet, wobei ein Ethylen-Propylen-5-Ethyliden-2-Norbornen-Copolymergummi besonders bevorzugt ist. Diese Copolymere können auch z. B. mit Mineralöl oder synthetischem Öl ölverstreckt werden.

Das bei der vorliegenden Erfindung bevorzugt verwendete Ethylen-α-Olefinnichtkonjungiertes Polyen-Copolymergummi (A) wird erhalten, indem Ethylen, ein oder mehr α-Olefin(e) einer Kohlenstoffzahl von 3 bis 20 und ein oder mehr nichtkonjungierte Polyen(e) statistisch (Random) copolymerisiert werden. In dem Ethylen-α-Olefin-nichtkonjungiertes Polyen-Copolymergummi (A) beträgt der Anteil von aus Ethylen erhaltenen Wiederholungseinheiten bevorzugt 40 - 80 Gew.%, stärker bevorzugt, 55 - 70 Gew.%, der Anteil von aus α-Olefinen mit 3 bis 20 Kohlenstoffatomen erhaltenen Wiederholungseinheiten beträgt bevorzugt 10 - 55 Gew.%, stärker bevorzugt 15 - 45 Gew.%, und der Anteil an aus nichtkonjugiertem Polyen erhaltenen Wiederholungseinheiten beträgt bevorzugt 1 - 20 Gew.%, stärker bevorzugt 3 - 10 Gew.%.

Bei der vorliegenden Erfindung wird das Ethylen-α-Olefin-nichtkonjungiertes Polyen-Copolymergummi (A) gegenüber 100 Gew.-Teilen der Gesamtmenge von Ethylen-α-Olefinnichtkonjungiertes Polyen-Copolymergummi (A) und Polypropylenharz (B) in einem Verhältnis von 15 bis 38 Gew.-Teilen, bevorzugt 20 bis 35 Gew.-Teilen verwendet.

Das bei der vorliegenden Erfindung verwendete Polypropylenharz (B) ist ein einzelnes Propylen oder besteht aus einem hochmolekularen Festkörperprodukt, das erhalten wird, indem Propylen mit einem oder mehreren Monoolefinen copolymerisiert wird. Als derartiges Polypropylenharz kann z. B. ein Polymerharz mit einer isotaktischen oder einer syndiotaktischen Struktur angeführt werden. Hierfür stellvertretende Harze können kommerziell erworben werden.

Als mit Propylen copolymerisierte Monoolefine bei dem Polypropylenharz (B) können konkret z. B. Ethylen, 1-Buten, 1-Penten, 1-Hexen, 1-Octen, 1-Decen, 2-Methyl-1-Propen, 3-Methyl-1-Penten, 4-Methyl-1-Penten, 5-Methyl-1-Hexen angeführt werden. Die Olefine von diesen werden einzeln oder als Gemisch von zwei oder mehr verwendet.

Hinsichtlich der Art der Polymerisierung kann eine beliebige Polymerisierungsart angewandt werden, sowohl eine statistische (Random)- als auch eine Blockform, solange eine harzförmige Substanz erhalten wird. Derartige Polypropylenharze (B) können einzeln, oder zwei oder mehr in Kombination verwendet werden.

Bevorzugt liegt die Schmelzflussrate (MFR) (ASTM D 1238-65T, 230 °C) der bei der vorliegenden Erfindung verwendeten Polypropylenharze (B) in einem Bereich von normalerweise 0,01 bis 100 g/10 min., insbesondere 0,05 bis 50 g/10 Min.

Bei der vorliegenden Erfindung wird Polypropylenharz (B) gegenüber 100 Gew.-Teilen der Gesamtmenge von Ethylen-α-Olefin-nichtkonjungiertes Polyen-Copolymergummi (A) und Polypropylenharz (B) in einem Verhältnis von 62 bis 85 Gew.-Teilen, bevorzugt 65 bis 80 Gew.-Teilen verwendet.

Das bei der vorliegenden Erfindung verwendete vernetzte, olefinische, thermoplastische Elastomer wird hergestellt, indem Ethylen-α-Olefin-nichtkonjungiertes Polyen-Copolymergummi (A), Polypropylenharz (B) und gegebenenfalls andere Bestandteile in Anwesenheit eines Vernetzers (C) dynamisch vernetzt werden. Dynamische Vernetzung bedeutet, dass mittels eines Mischers für Harze und Gummi diese Bestandteile vermischt werden und durch die chemische Reaktion des Vernetzers (C) das Ethylen-α-Olefinnichtkonjungiertes Polyen-Copolymergummi (A) vernetzt wird. Als Vernetzer (C) werden z. B. organische Peroxid oder Phenolharze verwendet.

Der Vernetzer (C) wird gegenüber 100 Gew.-Teilen der Gesamtmenge von Ethylen-α-Olefin-nichtkonjungiertes Polyen-Copolymergummi (A) und Polypropylenharz (B) in einem Verhältnis von 0,05 bis 10 Gew.-Teilen, bevorzugt 0,1 bis 5 Gew.-Teilen verwendet.

Das bei der vorliegenden Erfindung verwendete vernetzte, olefinische, thermoplastische Elastomer kann gegebenenfalls abgesehen von Ethylen-α-Olefinnichtkonjungiertes Polyen-Copolymergummi (A) und Polypropylenharz (B) mit einem anderen Polyolefinharz (D) als dem Polypropylenharz (B), einem Weichmacher (E) und/oder anorganischen Füllstoffen (F) vermischt werden.

Das bei der vorliegenden Erfindung verwendete andere Polyolefinharz (D) als das Polypropylenharz (B) besteht aus einem hochmolekularen Festkörperprodukt, das erzielt wird, indem mittels entweder eines Hochdruckverfahrens oder eines Niedrigdruckverfahrens ein oder mehrere Arten von Monoolefinen polymerisiert werden. Als ein derartiges Harz kann z. B. ein isotaktisches oder syndiotaktisches Olefinpolymerharz angeführt werden. Hierfür stellvertretende Harze können kommerziell erworben werden.

Als für das Polyolefinharz (D) geeignete Roh-Olefine können konkret z. B. Ethylen, Propylen, 1-Buten, 1-Penten, 1-Hexen, 1-Octen, 1-Decen, 2-Methyl-1-Propen, 3-Methyl-1-Penten, 4-Methyl-1-Penten und 5-Methyl-1-Hexen angeführt werden. Die Olefine von diesen werden einzeln oder als Gemisch von zwei oder mehr verwendet.

Hinsichtlich der Art der Polymerisierung kann eine beliebige Polymerisierungsart angewandt werden, sowohl eine Random- als auch eine Blockform, solange eine harzförmige Substanz erhalten wird. Derartige Polyolefinharze (D) können einzeln, oder zwei oder mehr in Kombination verwendet werden.

Das Polyolefinharz (D) wird gegenüber 100 Gew.-Teilen der Gesamtmenge von Ethylen-α-Olefin-nichtkonjungiertes Polyen-Copolymergummi (A) und Polypropylenharz (B) in einem Verhältnis von normalerweise 1 bis 50 Gew.-Teilen, bevorzugt 1 bis 30 Gew.-Teilen verwendet.

Als bei der vorliegenden Erfindung verwendeter Weichmacher (E) kann ein für normalen Gummi verwendeter Weichmacher verwendet werden. Konkret können z. B. Erdölsubstanzen, wie Prozessöl, Schmieröl, Paraffin, flüssiges Paraffin, Erdölasphalt oder Vaseline; Steinkohlenteerarten, wie Steinkohlenteer oder Teerpech; fettige Öle, wie Rizinusöl, Leinöl, Rapsöl, Sojabohnenöl, Kokosöl; Wachsarten wie Tallöl, Bienenwachs, Carnaubawachs oder Lanolin; Fettsäuren oder deren metallische Salze, wie Rizinolsäure, Palmitinsäure, Stearinsäure, Bariumstearat oder Calciumstearat; synthetische Polymersubstanzen, wie Erdölharze, Cumaron-Inden-Harze oder ataktisches Polypropylen; Ester-Weichmacher, wie Dioctylphthalat, Dioctyladipat oder Dioctylsebacat; oder mikrokistallines Wachs, Gummiersatz (Factis), flüssiges Polybutadien, denaturiertes flüssiges Polybutadien oder flüssiges Thiokol angeführt werden. Von diesen ist insbesondere Prozessöl vom Paraffintyp bevorzugt.

Bei der vorliegenden Erfindung kann der Weichmacher (E) vorab mit dem Ethylen-α-Olefin-nichtkonjungiertes Polyen-Copolymergummi (A) ölverstreckt werden oder aber dem kontinuierlichen Kneter beim dynamischen Vernetzen durch direktes Zuführen zugesetzt werden.

Der bei der vorliegenden Erfindung verwendete Weichmacher (E) wird gegenüber 100 Gew.-Teilen der Gesamtmenge von Ethylen-α-Olefine-nichtkonjungiertem Polyene-Copolymergummi (A) und Polypropylenharz (B) in einem Verhältnis von normalerweise 1 bis 70 Gew.-Teilen, bevorzugt 1 bis 50 Gew.-Teilen verwendet.

Als bei der vorliegenden Erfindung verwendete anorganische Füllstoffe (F) können konkret z. B. Kalziumkarbonat, Kalziumsilikat, Ton, Kaolin, Talk, Siliziumdioxid, Diatomit, Glimmerpulver, Asbest, Aluminiumoxid, Bariumsulfat, Aluminiumsulfat, Kalziumsulfat, alkalines Magnesiumkarbonat, Molybdändisulfid, Graphit, Glasfasern, Glaskugeln, Shirasu-Ballons, alkaline Magnesiumsulfat-Whisker, Kalziumtitanat-Whisker und Aluminiumborat-Whisker angeführt werden.

Die bei der vorliegenden Erfindung verwendeten anorganischen Füllstoffe (F) werden gegenüber 100 Gew.-Teilen der Gesamtmenge von Ethylen-α-Olefine-nichtkonjungiertem Polyene-Copolymergummi (A) und Polypropylenharz (B) in einem Verhältnis von normalerweise 1 bis 70 Gew.-Teilen, bevorzugt 1 bis 50 Gew.-Teilen verwendet.

Ferner können bei der vorliegenden Erfindung dem olefinischen, thermoplastischen Elastomer herkömmlich bekannte Pigmente, hitzebeständige Stabilisatoren, Antioxidationsmittel, Witterungsstabilisatoren, Antistatika, Metallseife und Schmiermittel wie Wachs in einem Umfang zugesetzt werden, der dem Zweck der Erfindung nicht schadet.

In der vorliegenden Erfindung wird der Ausdruck "umfasst" verwendet, um zu bezeichnen, dass weitere als die angegebenen Inhaltsstoffe vorliegen können. Der Begriff "umfasst" beinhaltet jedoch auch die engere Bedeutung "besteht aus", so dass andere als die angegebenen Inhaltsstoffe nicht vorliegen müssen.

### [Beispiele]

Im Folgenden wird die Erfindung anhand von Beispielen erläutert. Die Erfindung ist jedoch nicht auf diese Beispiele beschränkt.

Folgende Rohmaterialien wurden bei den Beispielen und Vergleichsbeispielen verwendet:
Ethylen-α-Olefin-nichtkonjungiertes Polyen-Copolymergummi (A)
   (A-1) Ethylen-Propylen-5-Ethyliden-2-Norbornen-Copolymergummi (Produkt der Exxon Mobil Corporation, Vistalon 7001)
Polypropylenharz (B)
   (B-1) Propylen-Homopolymerisat (Produkt der Prime Polymer Co., Ltd, E111G) (Schmelzflussrate (MFR) (ASTM D 1238-65T, 230 °C) 0,5 g/10 min.)
   (B-2) Propylen-Ethylen-Blockpolymer (Produkt der Prime Polymer Co., Ltd., E-150GK) (Schmelzflussrate (MFR) (ASTM D 1238-65T, 230 °C) 0,6 g/10 min.)
Vernetzer (C)
   (C-1) Gemisch aus 50% [2,5-Dimethyl-2,5-di(tert-butylperoxy)-hexyne-3 (Produkt der NOF Corporation)] und 50% Divinylbenzole (Produkt der Dow Chemical Company, DIVINYLBENZENE 63)
   (C-2) Dicumylperoxid (Produkt der NOF Corporation)
   (C-3) 3:3:2-Gemisch aus Phenolharz SP-1045 (Produkt der Schenectady International, Inc.)/Zinnchlorid/Zinkoxyd
Polyolefinharz (D)
   (D-1) Ethylen-Buten-1-Random-Copolymer (Produkt der Exxon Mobil Corporation, LL6202.19)
Weichmacher (E)
   (E-1) Raffiniertes Mineralöl (Produkt der Idemitsu Kosan Co., Ltd., Prozessöl PW-380)
   Anorganische Füllstoffe (F)
      (F-1) Talk (Produkt der Matsumura Sangyo (K.K.) Hi-Filler # PJ 5000) HSBR

Hydrierungsbehandeltes Styrol-Butadien-Copolymer (Produkt der JSR (K.K.), DYNARON 132OP)

### HDPE

Polyethylen hoher Dichte (Produkt der Borealis AG, Boracoat HE3453)

### [Beispiel 1]

Ein Gemisch aus 20 Gew.-Teilen Ethylen-Propylen-5-Ethyliden-2-Norbornen-Copolymergummi (A-1), 80 Gew.-Teilen Propylen-Ethylen-Blockpolymer (B-2), 20 Gew.-Teilen Talk (F-1) und 1,6 Gew.-Teilen Vernetzer (C-3) wurde mit dem Henschel-Mischer unter Rühren vermischt. Danach wurde das erzielte Gemisch mittels einem Zweischneckenextruder mit L/D = 30 und Schraubendurchmesser 44 mm in Stickstoffatmosphäre bei 220 °C extrudiert und Pellets der vernetzten, olefinischen, thermoplastischen Elastomerzusammensetzung (OTPV-1) wurden hergestellt.

Zur Anpassung der Außenoberfläche des Stahlrohrs (Außendurchmesser: 34 mm, Dicke: 3, 2 mm, Länge 1,5 m) an die Norm Sa 2 1/2 nach DIN 55928 Teil 4, wurde nach der Abstrahlbehandlung ein Chromatisierungsmittel aufgetragen und hinreichend getrocknet. Die Ansatzmenge des gesamten Chroms des Chromfilms betrug 500 mg/m². Nachdem ferner auf die Außenfläche eine Epoxidgrundierung aufgetragen wurde, erfolgte bei 200 °C eine Härtebehandlung. Die Dicke der Epoxidgrundierungsschicht betrug etwa 70 µm. Auf diese Außenoberfläche erfolgte mittels einer Extrudiermaschine mit 2-lagiger T-Form der Reihe nach eine Laminierung mit denaturierten Polyolefinen (ADMER (Marke) AT2727E, Produkt der Mitsui Chemicals Europe GmbH) und dem durch das vorbezeichnete Verfahren hergestellten vernetzten, olefinischen, thermoplastischen Elastomer (OTPV-1). Die Dicke des denaturierten Polyolefins betrug etwa 150 µm und die Dicke des vernetzten, olefinischen, thermoplastischen Elastomer betrug 2,0 mm.

Bezüglich dieses beschichteten Stahlrohrs wurde gemäß DIN 30678 zur Prüfung der Hitzebeständigkeit eine Messung der Eindruckhärte bei 100 °C (Indentation Hardness) und als Prüfung der Stossfestigkeit bei niedrigen Temperaturen eine Messung der Schlagfestigkeit bei -45 °C (Impact Strength) durchgeführt. Das Ergebnis ist in Tabelle 1 dargestellt.

### [Beispiel 2]

Bei einem Gemisch aus 30 Gew.-Teilen Ethylen-Propylen-5-Ethyliden-2-Norbornen-Copolymergummi (A-1), 30 Gew.-Teilen Propylen-Homopolymerisat (B-1), 50 Gew.-Teilen Talk (F-1) und 0,6 Gew.-Teilen Vernetzer (C-1) wurde als erste Herstellungsstufe ebenso wie bei dem Beispiel 1 in einem Zweischneckenextruder eine dynamische Vernetzungsreaktion durchgeführt. Danach wurden 110,6 Gew.-Teile der in der ersten Herstellungsstufe erzielten Zusammensetzung und 30 Gew.-Teile eines Propylen-Ethylen-Blockpolymers (B-2) als zweite Herstellungsstufe mit dem gleichen Zweischneckenextruder geschmolzen und geknetet und eine vernetzte, olefinische, thermoplastische Elastomerzusammensetzung (OTPV-2) wurde erhalten. Ferner wurde wie beim Beispiel 1 ein überzogenes Stahlrohr gefertigt und eine Prüfung der Hitzebeständigkeit sowie eine Prüfung der Stossfestigkeit bei niedrigen Temperaturen wurden durchgeführt. Das Ergebnis ist in Tabelle 1 dargestellt.

### [Beispiel 3]

Bei einem Gemisch aus 30 Gew.-Teilen Ethylen-Propylen-5-Ethyliden-2-Norbornen-Copolymergummi (A-1), 70 Gew.-Teilen Propylen-Homopolymerisat (B-1), 50 Gew.-Teilen Talk (F-1) und 2,4 Gew.-Teilen Vernetzer (C-3) wurde wie beim Beispiel 1 in einem Zweischneckenextruder eine dynamische Vernetzungsreaktion durchgeführt und eine vernetzten, olefinische, thermoplastische Elastomerzusammensetzung (OTPV-3) wurde erhalten. Ferner wurde wie beim Beispiel 1 ein überzogenes Stahlrohr gefertigt und eine Prüfung der Hitzebeständigkeit sowie eine Prüfung der Stossfestigkeit bei niedrigen Temperaturen wurden durchgeführt. Das Ergebnis ist in Tabelle 1 dargestellt.

### [Beispiel 4]

Bei einem Gemisch aus 30 Gew.-Teilen Ethylen-Propylen-5-Ethyliden-2-Norbornen-Copolymergummi (A-1), 30 Gew.-Teilen Propylen-Homopolymerisat (B-1), 10 Gew.-Teilen Ethylen-Buten-1-Random-Copolymer (D-1), 15 Gew.-Teilen raffinierten Mineralöls (E-1) und 0,6 Gew.-Teilen Vernetzer (C-1) wurde als erste Herstellungsstufe wie beim Beispiel 1 in einem Zweischneckenextruder eine dynamische Vernetzungsreaktion durchgeführt. Anschließend wurden 85,6 Gew.-Teile der in der ersten Herstellungsstufe erzielten Zusammensetzung und 40 Gew.-Teile eines Propylen-Ethylen-Blockpolymers (B-2) als zweite Herstellungsstufe wie beim Beispiel 1 mittels einem Zweischneckenextruder mit L/D = 30 und Schraubendurchmesser 44 mm in Stickstoffatmosphäre bei 220 °C extrudiert und eine vernetzten, olefinische, thermoplastische Elastomerzusammensetzung (OTPV-4) wurde erhalten. Ferner wurde wie beim Beispiel 1 ein überzogenes Stahlrohr gefertigt und eine Prüfung der Hitzebeständigkeit sowie eine Prüfung der Stossfestigkeit bei niedrigen Temperaturen wurden durchgeführt. Das Ergebnis ist in Tabelle 1 dargestellt.

### [Beispiel 5]

Abgesehen davon, dass Ethylen-Buten-1-Random-Copolymer (D-1) und raffiniertes Mineralöl (E-1) von Beispiel 4 nicht verwendet wurden, erfolgte alles wie beim Beispiel 4 und es wurde eine vernetzten, olefinische, thermoplastische Elastomerzusammensetzung (OTPV-5) erhalten. Es wurden 60,6 Gew.-Teile der in der ersten Herstellungsstufe erzielten Zusammensetzung und 40 Gew.-Teile eines Propylen-Ethylen-Blockpolymers (B-2) in der zweiten Herstellungsstufe verwendet. Ferner wurde wie beim Beispiel 1 ein überzogenes Stahlrohr gefertigt und eine Prüfung der Hitzebeständigkeit sowie eine Prüfung der Stossfestigkeit bei niedrigen Temperaturen wurden durchgeführt. Das Ergebnis ist in Tabelle 1 dargestellt.

### [Beispiel 6]

Abgesehen davon, dass 35 Gew.-Teile des Ethylen-Propylen-5-Ethyliden-2-Norbornen-Copolymergummis (A-1) von Beispiel 5, 35 Gew.-Teile Propylen-Homopolymerisat (B-1) und ferner 70,6 Gew.-Teile der in der ersten Herstellungsstufe erzielten Zusammensetzung und 30 Gew.-Teile eines Propylen-Ethylen-Blockpolymers (B-2) verwendet wurden, erfolgte alles wie beim Beispiel 5. Es wurde eine vernetzten, olefinische, thermoplastische Elastomerzusammensetzung (OTPV-6) erhalten und ferner wie beim Beispiel 1 ein überzogenes Stahlrohr gefertigt und eine Prüfung der Hitzebeständigkeit sowie eine Prüfung der Stossfestigkeit bei niedrigen Temperaturen wurden durchgeführt. Das Ergebnis ist in Tabelle 1 dargestellt.

### [Vergleichsbeispiel 1]

Abgesehen davon, dass anstelle des beim Beispiel 1 verwendeten thermoplastischen Elastomers aus vernetzten Olefinen (OTPV-1) das vorbezeichnete Polyethylen einer hohen Dichte verwendet wurde, wurde wie beim Beispiel 1 ein überzogenes Stahlrohr gefertigt und die Hitzebeständigkeit sowie Stossfestigkeit bei niedrigen Temperaturen wurden bewertet. Das Ergebnis ist in Tabelle 1 dargestellt.

### [Vergleichsbeispiel 2]

Abgesehen davon, dass anstelle des beim Beispiel 1 verwendeten thermoplastischen Elastomers aus vernetzten Olefinen (OTPV-1) ein Propylen-Ethylen-Blockpolymer (B-2) verwendet wurde, wurde wie beim Beispiel 1 ein überzogenes Stahlrohr gefertigt und die Hitzebeständigkeit sowie Stossfestigkeit bei niedrigen Temperaturen wurden bewertet. Das Ergebnis ist in Tabelle 1 dargestellt.

### [Vergleichsbeispiel 3]

Ein Gemisch aus 10 Gew.-Teilen Ethylen-Propylen-5-Ethyliden-2-Norbornen-Copolymergummi (A-1), 90 Gew.-Teilen Propylen-Homopolymerisat (B-1) wurde wie beim Beispiel 1 mit einem Zweischneckenextruder ohne Verwendung eines Vernetzers geschmolzen und geknetet und eine unvernetzte, olefinische, thermoplastische Elastomerzusammensetzung (OTPE-1) wurde erhalten. Ferner wurde wie beim Beispiel 1 ein überzogenes Stahlrohr gefertigt und eine Hitzebeständigkeitsprüfung sowie eine Stossfestigkeitsprüfung bei niedrigen Temperaturen wurden durchgeführt. Das Ergebnis ist in Tabelle 1 dargestellt.

### [Vergleichsbeispiel 4]

10 Gew.-Teilen Ethylen-Propylen-5-Ethyliden-2-Norbornen-Copolymergummi (A-1), 90 Gew.-Teilen des Propylen-Homopolymerisat (B-1) und 0,8 Gew.-Teilen Vernetzer (C-3) wurden verwendet. Wie beim Beispiel 1 wurde mit einem Zweischneckenextruder eine dynamische Vernetzung durchgeführt und eine vernetzten, olefinische, thermoplastische Elastomerzusammensetzung (OTPE-7) wurde erhalten. Ferner wurde wie beim Beispiel 1 ein überzogenes Stahlrohr gefertigt und eine Prüfung der Hitzebeständigkeit sowie eine Prüfung der Stossfestigkeit bei niedrigen Temperaturen wurden durchgeführt. Das Ergebnis ist in Tabelle 1 dargestellt.

### [Vergleichsbeispiel 5]

Es wurden 60 Gew.-Teile des vorbezeichneten HSBR, 40 Gew.-Teile des Propylen-Homopolymerisat (B-1), 60 Gew.-Teile raffinierten Mineralöls (E-1) und 0,5 Gew.-Teile Vernetzer (C-2) verwendet. Wie beim Beispiel 1 wurde mit einem Zweischneckenextruder eine dynamische Vernetzung durchgeführt und eine vernetzten, olefinische, thermoplastische Elastomerzusammensetzung (OTPE-8) wurde erhalten. Ferner wurde wie beim Beispiel 1 ein überzogenes Stahlrohr gefertigt und eine Prüfung der Hitzebeständigkeit sowie eine Prüfung der Stossfestigkeit bei niedrigen Temperaturen wurden durchgeführt. Das Ergebnis ist in Tabelle 1 dargestellt.

### [Vergleichsbeispiel 6]

Abgesehen davon, dass 40 Gew.-Teile des Ethylen-Propylen-5-Ethyliden-2-Norbornen-Copolymergummis (A-1) von Beispiel 5 und 40 Gew.-Teile Propylen-Homopolymerisat (B-1) und ferner 80,6 Gew.-Teile der in der ersten Herstellungsstufe erzielten Zusammensetzung und 20 Gew.-Teile eines Propylen-Ethylen-Blockpolymers (B-2) verwendet wurden, erfolgte alles wie beim Beispiel 5. Es wurde eine vernetzten, olefinische, thermoplastische Elastomerzusammensetzung (OTPV-9) erhalten und ferner wie beim Beispiel 1 ein überzogenes Stahlrohr gefertigt und eine Prüfung der Hitzebeständigkeit sowie eine Prüfung der Stossfestigkeit bei niedrigen Temperaturen wurden durchgeführt. Das Ergebnis ist in Tabelle 1 dargestellt.

### [Vergleichsbeispiel 7]

Abgesehen davon, dass 40 Gew.-Teile des Ethylen-Propylen-5-Ethyliden-2-Norbornen-Copolymergummis (A-1) von Beispiel 2, 40 Gew.-Teile Propylen-Homopolymerisat (B-1) und 80 Gew.-Teile Talk (F-1) und ferner 160,6 Gew.-Teile der in der ersten Herstellungsstufe erzielten Zusammensetzung und 20 Gew.-Teile eines Propylen-Ethylen-Blockpolymers (B-2) verwendet wurden, erfolgte alles wie beim Beispiel 2. Es wurde eine vernetzten, olefinische, thermoplastische Elastomerzusammensetzung (OTPV-10) erhalten und ferner wie beim Beispiel 1 ein überzogenes Stahlrohr gefertigt und eine Prüfung der Hitzebeständigkeit sowie eine Prüfung der Stossfestigkeit bei niedrigen Temperaturen wurden durchgeführt. Das Ergebnis ist in Tabelle 1 dargestellt.

**[Tabelle 1]**

| Uberzugharz | | Beispiele | | | | | | Vergleichsbeispiele | | | | | | |
|---|---|---|---|---|---|---|---|---|---|---|---|---|---|---|
| vernetzte, olefinische, thermoplastisches Elastomer | Rohmaterial | 1 | 2 | 3 | 4 | 5 | 6 | 1 | 2 | 3 | 4 | 5 | 6 | 7 |
| | A-1 | 20 | 30 | 30 | 30 | 30 | 35 | | | 10 | 10 | | 40 | 40 |
| | B-1 | | 30 | 70 | 30 | 30 | 35 | | | 90 | 90 | 40 | 40 | 40 |
| | B-2 | 80 | 40* | | 40* | 40* | 30* | | | | | | 20* | 20* |
| | C-1 | | 0,6 | | 0,6 | 0,6 | 0,6 | | | | | | 0,6 | 0,6 |
| | C-2 | | | | | | | | | | | 0,5 | | |
| | C-3 | 1.6 | | 2.4 | | | | | | | 0,8 | | | |
| | D-1 | | | | 10 | | | | | | | | | |
| | E-1 | | | | 15 | | | | | | | 60 | | |
| | F-1 | 20 | 50 | 50 | | | | | | | | | | 80 |
| | HSBR (DYNARON1320P) | | | | | | | | | | | 60 | | |
| HDPE | | | | | | | | 100 | | | | | | |
| PP(B-2) | | | | | | | | | 100 | | | | | |
| Hitzebeständigkeit (100°C Eindruckhärte, mm) | | 0,19 | 0,21 | 0,21 | 0,23 | 0,21 | 0,28 | 0,37 | 0,16 | 0,21 | 0,19 | 0,45 | 0,39 | 0,35 |
| Stossfestigkeit bei niedrigen Temperaturen (-45°C, Beschädigung der Überzugsschicht) | | Nein | Nein | Nein | Nein | Nein | Nein | Nein | Ja | Ja | Ja | Nein | Nein | Nein |

Hinsichtlich der mit "*" gekennzeichneten Angabe von B-2 (Propylen-Ethylen-Blockpolymer) erfolgte, wie beim Beispiel 2, zunächst ohne dessen Verwendung mit den anderen Rohmaterialien in der ersten Herstellungsstufe eine dynamische Vernetzung in einem Zweischneckenextruder. Anschließend wurde die in der ersten Herstellungsstufe erzielte Zusammensetzung mit B-2 (Propylen-Ethylen-Blockpolymer) in der zweiten Herstellungsstufe mit dem Zweischneckenextruder geschmolzen und geknetet.

## Patentansprüche

1. Ein Stahlrohr, das über denaturierte Polyolefine auf der Oberflächenvorbehandelten Außenoberfläche mit einem vernetzten, olefinischen, thermoplastischen Elastomer beschichtet ist, das erzielt wird aus einem Gemisch enthaltend 15 bis 38 Gew.-Teile eines Ethylen-α-Olefin-nichtkonjungiertes Polyen-Copolymergummis (A) aus Ethylen, einem oder mehr α-Olefinen einer Kohlenstoffzahl von 3 bis 20 und einem oder mehr nichtkonjungierten Polyenen, 85 bis 62 Gew.-Teilen Polypropylenharz (B) [die Gesamtmenge der Bestandteile (A) und (B) ergibt 100 Gew.-Teile] und 0,05 bis 10 Gew.-Teile Vernetzer (C).

2. Das Stahlrohr gemäß Anspruch 1, wobei das vernetzte, olefinische, thermoplastische Elastomer erhalten wird, indem ein Gemisch enthaltend 15 bis 38 Gew.-Teile eines Ethylen-α-Olefin-nichtkonjungiertes Polyen-Copolymergummis (A) aus Ethylen, einem oder mehr α-Olefinen mit einer Kohlenstoffzahl von 3 bis 20 und einem oder mehr nichtkonjungierten Polyenen, 85 bis 62 Gew.-Teilen Polypropylenharz (B) [die Gesamtmenge der Bestandteile (A) und (B) ergibt 100 Gew.-Teile] und 0,05 bis 10 Gew.-Teile Vernetzer (C) einem kontinuierlichen Kneter kontinuierlich zugeführt und dynamisch wärmebehandelt wird.

3. Das Stahlrohr gemäß Anspruch 2, wobei das Gemisch wenigstens eines ausgewählt aus 1 bis 50 Gew.-Teile eines anderen Polyolefinharzes (D) als dem Polypropylenharz (B), 1 bis 70 Gew.-Teile Weichmacher (E) und 1 bis 70 Gew.-Teile anorganischer Füllstoffe (F) enthält.

4. Das Stahlrohr gemäß Anspruch 2 oder 3, wobei das Ethylen-α-Olefinnichtkonjungiertes Polyen-Copolymergummi (A) aus Ethylen, einem oder mehr α-Olefinen mit einer Kohlenstoffzahl von 3 bis 20 und einem oder mehr nichtkonjungiertem Polyen mit einem Teil von oder dem gesamten Weichmacher (E) ölverstreckt wird.

5. Das Stahlrohr gemäß einem der Ansprüche 2 bis 4, wobei der Vernetzer (C) ein organisches Peroxid und/oder ein Phenolharz ist.

6. Gemisch, umfassend 15 bis 38 Gew.-Teile eines Ethylen-α-Olefin-nichtkonjungiertes Polyen-Copolymergummis (A) aus Ethylen, einem oder mehr α-Olefinen mit einer Kohlenstoffzahl von 3 bis 20 und einem oder mehr nichtkonjungierten Polyenen, 85 bis 62 Gew.-Teilen Polypropylen (B) [worin die Gesamtmenge der Bestandteile (A) und (B) 100 Gew.-Teile ergibt] und 0,05 bis 10 Gew.-Teile Vernetzer (C).

7. Gemisch gemäß Anspruch 6, welches ferner wenigstens eines, ausgewählt aus 1 bis 50 Gew.-Teile eines anderen Polyolefinharzes (D) als dem Polypropylenharz (B), 1 bis 70 Gew.-Teile Weichmacher (E) und 1 bis 70 Gew.-Teile anorganischer Füllstoffe (F) enthält.

8. Vernetztes Material, erhältlich durch Vernetzen des Gemisches des Gemisches gemäß Anspruch 6 oder Anspruch 7.

9. Verfahren zur Herstellung eines beschichteten Metallwerkstücks, insbesondere eines Stahlrohrs, worin das Metallwerkstück oberflächenbehandelt wird, um eine Oberfläche zu bilden, die denaturiertes Polyolefin umfasst, und das oberflächenbehandelte Metallwerkstück mit einem vernetzten Material gemäß Anspruch 8 beschichtet wird.

10. Verfahren gemäß Anspruch 9, worin das Material über einen kontinuierlichen Kneter kontinuierlich zugeführt und dynamisch vernetzt wird.
